# EUROPÄISCHE PATENTSCHRIFT

(11) **EP 2 986 459 B1**
(45) Veröffentlichungstag und Bekanntmachung des Hinweises auf die Patenterteilung: **20.06.2018**
(21) Anmeldenummer: 14730899.3
(22) Anmeldetag: 17.06.2014
(51) Int. Cl.: B60G 7/00, B60G 7/02, B60G 9/00

(54) **LÄNGSLENKER**
LONGITUDINAL CONTROL ARM
BRAS OSCILLANT LONGITUDINAL

(30) Priorität: 19.06.2013 DE 102013211468
(43) Veröffentlichungstag der Anmeldung: 24.02.2016
(73) Patentinhaber: SAF-HOLLAND GmbH, 63856 Bessenbach (DE)
(72) Erfinder: SPIELMANN, Rolf, 97877 Wertheim-Bettingen (DE); HOPPE, Matthias, 63579 Freigericht- Horbach (DE)
(74) Vertreter: Müller Schupfner & Partner Patent- und Rechtsanwaltspartnerschaft mbB
(86) Internationale Anmeldenummer: PCT/EP2014/062642
(87) Internationale Veröffentlichungsnummer: WO 2014/202563

(56) Entgegenhaltungen:
- EP-A1- 1 728 654
- EP-A2- 2 397 340
- CA-A1- 2 727 344
- DE-A1-102005 022 745
- GB-A- 2 396 140
- US-A- 5 203 585
- US-A1- 2006 181 047

## Beschreibung

Die vorliegende Erfindung betrifft einen Längslenker zur Anbindung eines Achsrohrs an einen Fahrzeugrahmen sowie ein Fahrzeugachssystem, insbesondere für ein Nutzfahrzeug.

Längslenker der in Rede stehenden Art sind aus dem Stand der Technik bekannt. Sie kommen z. B. in Starrachs- oder in Lenkachssystemen von Nutzfahrzeugen zum Einsatz. Sie dienen der Anbindung eines Achsrohrs an ein Fahrzeug bzw. an einen Fahrzeugrahmen und gewährleisten eine seitliche Führung des Achsrohrs. Zudem sind sie Teil des Feder- und Dämpfungssystems des Fahrwerks und weisen als solche entsprechende Anbindungsmöglichkeiten für Feder- bzw. Dämpferelemente auf. Die bekannten Längslenker haben allerdings den Nachteil, dass sie sehr groß und schwer bauen, da hohe Kräfte übertragen werden müssen. Dies beengt die knappen Platzverhältnisse unterhalb des Fahrzeugs bzw. unterhalb des Fahrzeugrahmens zusätzlich. Eine optimale Anbindung Längslenker an das Achsrohr bzw. der Längslenker an den Fahrzeugrahmen ist dadurch oft nicht möglich. Zusätzlich gibt es meist Einschränkungen hinsichtlich der Verwendung von Breitreifen, großer Trommelbremsen oder auch großer Scheibenbremsen, da die bekannten Längslenker zu breit bauen. Bei Verwendung in Lenkachssystemen sind damit einhergehend auch oftmals die realisierbaren Lenkeinschläge kleiner als gewünscht.

Die EP 2 397 340 A2 offenbart einen Längslenker zur Anbindung eines Achsrohrs an einen Fahrzeugrahmen, welcher sich entlang einer Längsrichtung erstreckt und einen rahmenseitigen Anordnungsabschnitt und zumindest einen achsrohrseitigen Anordnungsabschnitt aufweist, wobei eine Mittellinie des achsrohrseitigen Anordnungsabschnitts quer zur Längsrichtung gesehen zu einer Mittellinie des rahmenseitigen Anordnungsabschnitts um einen Versatz verlagert ist, wobei der Längslenker zumindest bereichsweise als Hohlprofil ausgebildet ist, wobei der Längslenker ein Trägeroberteil und ein Trägerunterteil aufweist, wobei das Trägeroberteil und/oder das Trägerunterteil je einen achsrohrseitigen Anordnungsabschnitt aufweisen, wobei das Trägeroberteil und das Trägerunterteil eine Teilungsebene bilden, welche in einem Winkel zur horizontale Ebene steht. Es ist daher Aufgabe der vorliegenden Erfindung, einen Längslenker zur Anbindung eines Achsrohrs an einen Fahrzeugrahmen sowie ein Fahrzeugachssystem bereitzustellen, welche die genannten Nachteile beseitigen und eine flexiblere Anordnung des oder der Längslenker sowohl an den Fahrzeugrahmen als auch an das Achsrohr ermöglichen.

Diese Aufgabe wird gelöst durch einen Längslenker zur Anbindung eines Achsrohrs an einen Fahrzeugrahmen gemäß Anspruch 1 sowie durch ein Fahrzeugachssystem gemäß Anspruch 8. Weitere Vorteile und Merkmale der Erfindung ergeben sich aus den Unteransprüchen und den beigefügten Figuren.

Erfindungsgemäß ist ein Längslenker vorgesehen zur Anbindung eines Achsrohrs an einen Fahrzeugrahmen, welcher sich entlang einer Längsrichtung erstreckt und einen rahmenseitigen Anordnungsabschnitt und zumindest einen achsrohrseitigen Anordnungsabschnitt aufweist, wobei eine Mittellinie des achsrohrseitigen Anordnungsabschnitts quer zur Längsrichtung gesehen zu einer Mittellinie des rahmenseitigen Anordnungsabschnitts um einen Versatz verlagert ist, wobei der Längslenker zumindest bereichsweise als Hohlprofil ausgebildet ist, wobei der Längslenker ein Trägeroberteil und ein Trägerunterteil aufweist, wobei das Trägeroberteil und/oder das Trägerunterteil je einen achsrohrseitigen Anordnungsabschnitt aufweisen, wobei das Trägeroberteil und das Trägerunterteil eine Teilungsebene bilden, welche in einem Winkel zur horizontale Ebene steht, wobei der oder die achsrohrseitigen Anordnungsabschnitte einen Umschlingungswinkel < 180° aufweisen. Es versteht sich, dass der Längslenker auch an Anhängern, Trailern etc. verwendbar ist. Achsen bzw. Starrachsen für Nutzungsfahrzeuge (wie auch für Anhänger, Trailer etc.), sowohl gelenkt als auch ungelenkt, umfassen in der Regel ein Achsrohr, das an beiden Enden einen Achsstummel aufweist. An den Achsstummeln wiederum können z. B. das Bremssystem und die Reifen etc. angeordnet werden. Eine derartige Achse ist in der Regel über zwei Längslenker (manchmal auch Funktionslenker genannt) mit dem Fahrzeugrahmen bzw. mit dem Chassis schwenkbar verbunden. Die Längslenker sind im Wesentlichen entlang der Fahrtrichtung orientiert. Die Längsrichtung entspricht also im Wesentlichen der Fahrtrichtung. Das Achsrohr ist im Wesentlichen quer oder rechtwinklig zu den Längslenkern bzw. der Fahrtrichtung an den Längslenkern bzw. in diesen angeordnet. Achsrohr und Längslenker können direkt miteinander verbunden, beispielsweise verschweißt, werden. Alternativ bevorzugt ist zwischen dem Längslenker und dem Achsrohr auch eine Schale (auch Wrap genannt) angeordnet, die insbesondere den Wärmeeintrag beim Verweißen in das Achsrohr reduzieren kann. Für die Anordnung am Rahmen bzw. am Fahrzeug weist der Längslenker den rahmenseitigen Anordnungsabschnitt auf, für die Anordnung am Achsrohr bzw. für die Anordnung des Achsrohrs den achsrohrseitigen Anordnungsabschnitt. Die genannte Schale kann beispielsweise am achsrohrseitigen Anordnungsabschnitt bzw. innerhalb dessen angeordnet sein. Der rahmenseitige Anordnungsabschnitt und der achsrohrseitige Anordnungsabschnitt weisen zueinander einen Abstand auf, wobei der Abstand im Wesentlichen die Entfernung von Drehpunkten bzw. Mittelpunkten der Anordnungsabschnitte bezeichnet. Abhängig von der Einbaulage des Längslenkers verläuft der Abstand im Wesentlichen etwa parallel zu einer horizontalen Ebene, also zur Fahrbahnebene. Er kann aber auch schräg verlaufen. Dies gilt in gleicher Weise für die Längsrichtung, welche im Wesentlichen entlang des Abstands verläuft. Quer zur Längsrichtung weisen der rahmenseitige Anordnungsabschnitt und der achsohrseitige Anordnungsabschnitt jeweils eine Breite auf. Bevorzugt ist der rahmenseitige Anordnungsabschnitt durch eine runde im Wesentlichen kreisrunde Öffnung gebildet, welche sich im Wesentlichen quer zur Längsrichtung erstreckt. Bevorzugt ist die Öffnung im Querschnitt auch gerade nicht rund, sondern z. B. oval, polygonförmig und/oder eckig. So werden in den rahmenseitigen Anordnungsabschnitten bevorzugt Gummilager oder dergleichen eingesetzt, welche in der Regel im Wesentlichen mittig ein rundes Loch zum Durchstecken einer Achse oder dergleichen aufweisen. Vorteilhafterweise ist eine Außenkontur der Gummilager gerade nicht rund bzw. kreisrund, um ein Verdrehen im rahmenseitigen Anordnungsabschnitt zu verhindern. Der rahmenseitige Anordnungsabschnitt kann mit Vorteil also z. B. auch oval oder polygonförmig ausgebildet sein. Quer zur Längsrichtung weist der rahmenseitige Anordnungsabschnitt bzw. dessen Innenkontur die Breite auf, welche bevorzugt im Wesentlichen konstant ist. Die Mittellinie des rahmenseitigen Anordnungsabschnitts schneidet die Kontur im Wesentlichen mittig bzw. achssymmetrisch. Ähnliches gilt für den achsrohrseitigen Anordnungsabschnitt, welcher ebenfalls bevorzugt eine Öffnung darstellt, welche sich im Wesentlichen quer zur Längsrichtung mit der Breite erstreckt. Bevorzugt ist die Öffnung im Wesentlichen rund oder insbesondere auch kreisrund. Alternativ ist die Öffnung auch oval, polygonförmig und/oder eckig. Die Mittellinie des achsrohrseitigen Anordnungsabschnitts teilt die Breite im Wesentlichen mittig oder achssymmetrisch. Die Mittellinien sowohl des rahmenseitigen Anordnungsabschnitts als auch des achsrohrseitigen Anordnungsabschnitts verlaufen im Wesentlichen parallel zur Längsrichtung und sind um den Versatz verlagert. Zweckmäßigerweise liegt der Versatz in einem Bereich von 10 mm bis 200 mm, bevorzugt in einem Bereich von 30 mm bis 150 mm, ganz bevorzugt in einem Bereich von etwa 40 mm bis 100 mm. Zweckmäßigerweise liegt ein Verhältnis des Versatzes zu dem Abstand zwischen dem achsrohrseitigen und dem rahmenseitigen Anordnungsabschnitt in einem Bereich von etwa 0,01 bis 0,4, bevorzugt etwa in einem Bereich von 0,04 bis 0,3, ganz bevorzugt in einem Bereich von etwa 0,05 bis 0,2. Bevorzugt liegen also der rahmenseitige Anordnungsabschnitt und der achsrohrseitige Anordnungsabschnitt entlang der Längsrichtung bzw. der Fahrtrichtung gesehen nicht auf einer Linie bzw. nicht in einer Flucht. Vorteilhafterweise kann der Längslenker durch den Versatz anderen Gegenständen sozusagen ausweichen. Zweckmäßigerweise ist der Versatz durch unterschiedliche Breiten des achsrohrseitigen und des rahmenseitigen Anordnungsabschnitts erzielbar. Der Längslenker kann in diesem Fall entlang der Längsrichtung im Wesentlichen eine gleiche Breite aufweisen, wobei sozusagen nur die Anordnungsabschnitte zueinander verlagert oder versetzt sind bzw. auch nur deren Mittellinien. Alternativ bevorzugt sind der rahmenseitige und der achsrohrseitige Anordnungsabschnitt auch gleich breit, wobei dann die Form des Längslenkers entlang der Längsrichtung den Versatz bestimmt. Beispielsweise nimmt der Längslenker in einer Draufsicht (im eingebauten Zustand auf die Fahrbahnebene gesehen) in etwa eine S-Form ein. Mit Vorteil kann eine derartige S-Form natürlich auch mit unterschiedlich breiten Anordnungsabschnitten kombiniert werden. Vorteilhafterweise ist damit eine äußerst flexible Anpassung an die Platzverhältnisse unterhalb des Fahrzeugs gegeben. Neben der Raumausnutzung sind durch den oder die Längslenker auch die Kraftflüsse optimierbar. Ebenfalls bevorzugt ermöglicht der Längslenker nämlich eine unterschiedliche Abstützweite am Fahrzeug und am Achsrohr. Dabei definiert der Begriff Abstützweite die Entfernung von zwei entsprechenden Anordnungsabschnitten (rahmenseitig und/oder achsrohrseitig) zweier nebeneinander angeordneter Längslenker quer zur Längsrichtung. Mit Vorteil sind durch den Versatz also unterschiedliche Abstützweiten erzielbar. Die Entfernung zweier rahmenseitiger Anordnungsabschnitte ist also mit Vorteil nicht die Gleiche wie die der achsrohrseitigen Anordnungsabschnitte. Mit Vorteil ist die Abstützweite am Fahrzeug größer als die Abstützweite am Achsrohr, alternativ bevorzugt auch umgekehrt. Die breite Abstützung am Fahrzeug ermöglicht eine äußerst stabile Lagerung des gesamten Aufbaus. Von großem Vorteil ist es also, wenn die Mittellinie des achsrohrseitigen Anordnungsabschnitts gegenüber der Mittellinie des rahmenseitigen Anordnungsabschnitts zu einer Fahrwerks- bzw. Fahrzeugmittellinie hin um den Versatz verlagert ist. Damit wird eine größtmögliche Abstützung der Längslenker am Fahrzeug bei gleichzeitigem Bauraumgewinn, beispielsweise für Breitreifen, geschaffen. Bei Verwendung in einer Lenkachsausführung ist neben der breiten Abstützung am Fahrzeug und dem möglichen Einsatz einer breiten Bereifung zusätzlich ein weitaus größerer Lenkeinschlag bzw. Lenkwinkel möglich. Der zusätzlich auf der Außenseite gewonnene Bauraum kommt dabei nicht nur einer breiteren Bereifung zugute, sondern kann auch dazu genutzt werden, um größer bzw. breiter bauende Trommelbremsen oder länger bauende Scheibenbremsen leichter zu adaptieren bzw. deren Montage zu erleichtern. Es versteht sich, dass es auch möglich ist, zwei Längslenker, welche den Versatz aufweisen, derart anzuordnen, dass die Abstützweite am Fahrzeug die Gleiche ist wie am Achsrohr. Der Längslenker ist zumindest bereichsweise als Hohlprofil ausgebildet, wobei das Hohlprofil vorzugsweise einen Querschnitt aufweist, welcher in Richtung des rahmenseitigen Anordnungsabschnitts zumindest bereichsweise zunimmt. Bevorzugt ist das Hohlprofil ein aus Einzelteilen zusammengeschweißtes Kastenprofil. Besonders bevorzugt ist das Hohlprofil aber mit einem Innenhochdruckumformverfahren (IHU) hergestellt. Mit Vorteil nimmt der Querschnitt des Hohlprofils zumindest abschnittsweise in Richtung des rahmenseitigen Anordnungsabschnitts zu. Bevorzugt ist dadurch eine sehr steife Gestaltung des rahmenseitigen Anordnungsabschnitts möglich. Der Längslenker ist mit Vorteil derart geformt, dass er ein schmutzabweisendes Design aufweist, in dem keine Hinterschnitte, Muldenbildungen und Vertiefungen etc. ausgeführt sind, wodurch die Möglichkeit gegeben ist, einer schädigenden Schmutzablagerung durch Steine, Staub und Salzwasser vorzubeugen. Ein weiterer Vorteil einer übergangsfreien und in sich geschlossenen Längslenkerform ist eine widerstandsarme, stromlinienförmige Gestaltung, die einer extremen Luftverwirbelung unter dem Fahrzeug entgegenwirkt. Bevorzugt ist durch das IHU-Verfahren die Wanddicke flexibel auf die zu erwartende Traglast des Längslenkers abstimmbar. Ebenfalls bevorzugt kann der Längslenker auch als Fachwerk ausgebildet sein. Auch durch die Verwendung einer Fachwerkstruktur kann eine optimale Ausrichtung anhand der auftretenden Kräfte ermöglicht werden. Von großem Vorteil ist es dabei, eine derartige Fachwerkstruktur mit dem Versatz zwischen den Mittellinien des rahmenseitigen und des achsrohrseitigen Anordnungsabschnitts zu kombinieren. In der Kombination ist damit eine sehr leichte, steife und äußerst flexible Ausgestaltung des Längslenkers möglich. Besonders bevorzugt ist zudem die Kombination des Versatzes mit einem mittels eines IHU-Verfahrens gefertigten Längslenkers.

Mit Vorteil weist der Längslenker quer zu einer horizontalen Ebene eine Wölbung auf, wobei sich die Wölbung bevorzugt zwischen dem achsrohrseitigen und dem rahmenseitigen Anordnungsabschnitt erstreckt. Die horizontale Ebene entspricht dabei zweckmäßigerweise einer Ebene, auf der die Schwenkachse des rahmenseitigen Anordnungsabschnitts und die Mittelachse des achsrohrseitigen Anordnungsabschnitts liegen, und insbesondere im Wesentlichen der Fahrbahnebene. Mit Vorteil erstreckt sich die Wölbung auf den gesamten Längslenker bzw. auf dessen gesamten Querschnitt, also nicht nur beispielsweise auf eine Oberkante des Längslenkers. Mit großem Vorteil bildet nämlich die Wölbung sozusagen einen Freiraum unter sich bzw. zwischen dem rahmenseitigen und dem achsrohrseitigen Anordnungsabschnitt. Die Wölbung dient also dazu, den rahmenseitigen und den achsrohrseitigen Anordnungsabschnitt nicht direkt, also auf kürzestem Wege gerade zu verbinden, sondern sozusagen in einem Bogen, wobei sich der Bogen bzw. die Wölbung zwischen dem achsrohrseitigen und dem rahmenseitigen Anordnungsabschnitt erstreckt. Bevorzugt erstreckt sich der Bogen bzw. die Wölbung von der horizontalen Ebene weg. Damit ist zum einen eine sehr hohe Bodenfreiheit erzielbar, zum anderen wird damit zusätzlicher Platz für andere Aggregate unterhalb des Fahrzeugs geschaffen. Alternativ bevorzugt können die genannten Vorteile und Merkmale aber auch dadurch realisiert werden, dass sich der Bogen bzw. die Wölbung gerade zur horizontalen Ebene hin erstreckt. Unter Umständen wird damit zwar die Bodenfreiheit reduziert, es kann aber der Einfederweg deutlich erhöht werden, da der Platzbedarf des Längslenkers nach oben minimal ist. Die tatsächliche Ausgestaltung der Wölbung wird daher vorteilhafterweise vom Einsatzzweck bzw. Einsatzort des jeweiligen Fahrzeugs abhängen. Es versteht sich, dass sich der Bogen nicht durchgängig zwischen dem achsrohrseitigen und dem rahmenseitigen Anordnungsabschnitt erstrecken muss. Beispielsweise kann auch nur ein Abschnitt des Längslenkers zwischen dem rahmenseitigen Anordnungsabschnitt und dem achsrohrseitigen Anordnungsabschnitt im Wesentlichen quer zur horizontalen Ebene nach oben oder nach unten ausgestellt sein, um zusätzlichen Bauraum zwischen den beiden Anordnungsabschnitten zu schaffen. Vorteilhafterweise weist die Wölbung bzw. der Bogen eine maximale Erstreckung im Wesentlichen quer zur horizontalen Ebene ausgehend von dem Drehpunkt des rahmenseitigen Anordnungsabschnitts auf, welche bevorzugt in einem Bereich von etwa 50 mm bis 200 mm liegt. Die Erstreckung bemisst sich dabei lotrecht zum Abstand der Drehpunkte bzw. Mittelpunkte des rahmenseitigen und des achsrohrseitigen Anordnungsabschnitts. Bevorzugt liegt ein Verhältnis der Erstreckung zum Abstand der beiden Anordnungsabschnitte in einem Bereich von etwa 0,1 bis 0,5, besonders bevorzugt in einem Bereich von etwa 0,2 bis 0,3.

Weiter weist der Längslenker ein Trägeroberteil und ein Trägerunterteil auf, wobei das Trägeroberteil und das Trägerunterteil, insbesondere deren Trennfläche bzw. Kontaktfläche, eine Teilungsebene bilden, welche in einem Winkel zur horizontalen Ebene steht. Mit Vorteil verläuft die Teilungsebene durch den achsrohrseitigen Anordnungsabschnitt. Besonders bevorzugt auch durch den Drehpunkt bzw. Mittelpunkt des achsohrseitigen Anordnungsabschnitts. Bevorzugt schneidet also die Teilungsebene den achsrohrseitigen Anordnungsabschnitt. Mit anderen Worten ist der Längslenker also im Bereich des achsrohrseitigen Anordnungsabschnitts geteilt. Vorteilhafterweise beträgt der Winkel zwischen der Teilungsebene und der horizontalen Ebene in einer bevorzugten Ausführungsform in etwa 180°. Die Teilungsebene steht also im Wesentlichen bevorzugt parallel zur horizontalen Ebene bzw. zur Fahrbahnebene. Dies ist besonderes vorteilhaft für den Kraftfluss vom Längslenker auf das Achsrohr und in diesem Zusammenhang für die Verbindung mit dem Achsrohr. Das Trägeroberteil und das Trägerunterteil müssen dabei nicht zwingend miteinander verbunden sein. Beide können beispielsweise mit dem Achsrohr form- und/oder kraftschlüssig verbunden sein, ohne sich dabei zu berühren. Vorteilhafterweise sind aber das Trägeroberteil und das Trägerunterteil über zumindest eine Kontaktfläche miteinander verbunden. Bevorzugt liegt die Kontaktfläche innerhalb der Teilungsebene bzw. ist ein Teil derer. Erfindungsgemäß weisen das Trägeroberteil und/oder das Trägerunterteil je einen achsrohrseitigen Anordnungsabschnitt auf, wobei der oder die achsrohrseitigen Anordnungsabschnitte einen Umschlingungswinkel < 180° aufweisen. Mit Vorteil wird also der achsrohrseitige Anordnungsabschnitt des Längslenkers durch die achsrohrseitigen Anordnungsabschnitte des Trägeroberteils und des Trägerunterteils gebildet. Es gelten sämtliche bereits genannten Vorteile und Merkmale bezüglich der Anordnungsabschnitte. Die Aufteilung in das Trägeroberteil und das Trägerunterteil bzw. die Verwendung von zumindest zwei achsrohrseitigen Anordnungsabschnitten ermöglicht mit Vorteil, dass z. B. der achsrohrseitige Anordnungsabschnitt des Trägeroberteils breiter ausgeführt ist als der des Unterteils bzw. umgekehrt. Zweckmäßigerweise ist damit der Kraftfluss optimierbar. Ein großer Vorteil eines Umschlingungswinkels < 180° ist, dass das Achsrohr nicht in den Längslenker geschoben werden muss, sondern dass der Längslenker bzw. die Trägeroberteile oder die Trägerunterteile auf das Achsrohr aufgesetzt werden können. Es versteht sich, dass auch ein Längslenker, welcher nicht aus einem Trägeroberteil und einem Trägerunterteil gebildet ist, einen Umschlingungswinkel < 180° aufweisen kann. Vorteilhafterweise ist aber durch die Verwendung des Trägeroberteils, welche jeweils beide einen Umschlingungswinkel < 180° aufweisen, in Summe wieder ein Umschlingungswinkel erzielbar, welcher > 180° ist.

Zweckmäßigerweise sind das Trägeroberteil und/oder das Trägerunterteil form- und/oder kraftschlüssig mit einer Adapterplatte verbunden, wobei die Adapterplatte form- und/oder kraftschlüssig mit einer Tragfläche verbunden ist, welche ausgelegt ist für die Anordnung eines Feder-/Dämpferelements. In dieser Variante ist der Längslenker also in Summe sozusagen dreiteilig ausgeführt, wobei die drei Teile über die Adapterplatte miteinander verbunden sind. Es versteht sich, dass der Längslenker auch einteilig ausgebildet sein kann, wobei dann die Tragfläche ein Teil des Längslenkers ist. Ebenfalls mit Vorteil kann die Tragfläche auch ein Teil des Trägerunterteils oder ein Teil des Trägeroberteils sein. Bevorzugt werden das Trägeroberteil, das Trägerunterteil und/oder auch die Tragfläche auf Stoß mit der Adapterplatte verschweißt. Bevorzugt kann die Adapterplatte aber auch eine Öffnung aufweisen, durch welche das Trägerunterteil, das Trägeroberteil und/oder die Tragfläche hindurchragen können, was ein umfängliches Verschweißen (entlang der Außenkontur der genannten Teile) mit der Adapterplatte ermöglicht. An der Adapterplatte ist auch mit großem Vorteil ein Verschrauben der genannten Teile möglich. Auch das Trägeroberteil und das Trägerunterteil können miteinander verschraubt werden. Ebenfalls bevorzugt ermöglicht die Adapterplatte die Kombination unterschiedlicher Werkstoffe. So kann beispielsweise der Längslenker bzw. das Trägeroberteil und/oder das Trägerunterteil aus einem Stahl- oder Aluminiumwerkstoff gefertigt sind, während an der Adapterplatte eine Trägfläche aus einem Komposit- oder Verbundmaterial beispielsweise form- und/oder kraftschlüssig über geeignete Schraubverbindungen anordenbar ist.

Zweckmäßigerweise weist der Längslenker am achsrohrseitigen Anordnungsabschnitt zur Anbindung des Achsrohrs und/oder der Schale zumindest einen Vorsprung auf, welcher sich im Wesentlichen entlang des Achsrohrs erstreckt. Mit Vorteil weist der Vorsprung den gleichen Umschlingungswinkel wie der Längslenker bzw. das Trägeroberteil oder das Trägerunterteil auf. Es versteht sich, dass umfänglich um das Achsrohr mehr als ein Vorsprung angeordnet werden kann. Außerdem ist eine Anordnung zu beiden Seiten des Längslenkers bzw. des achsrohrseitigen Anordnungsabschnitts möglich. In einer bevorzugten Ausführungsform mit einer Teilungsebene, welche im Wesentlichen parallel zur horizontalen Ebene steht, ist am Trägeroberteil, zu beiden Seiten des Lenkers, bevorzugt ein Vorsprung angeordnet. Der Vorsprung kann beispielsweise am Längslenker bzw. am Trägeroberteil und/oder am Trägerunterteil angeschweißt werden. Mit Vorteil können aber die genannten Bauteile den Vorsprung auch selbst ausbilden. Der Vorsprung muss dann nicht extra angebracht werden. Der Vorsprung weist zum Achsrohr bzw. zur Schale vorteilhafterweise einen Kontaktbereich auf. Mit Vorteil bildet der Kontaktbereich im Wesentlichen einen Linienkontakt und keinen Flächenkontakt. Gleiches gilt für die Anordnung zum Längslenker hin. Auch hier ist mit Vorteil ein Linienkontakt vorgesehen. Der Vorsprung hat zweckmäßigerweise also nicht mit seiner gesamten Breite bzw. mit seiner gesamten Höhe Kontakt mit dem zu verbindenden bzw. angeordneten Bauteil. Aufgrund der äußerst günstigen Krafteinleitung in das Achsrohr kann der Längslenker, der den oder die Vorsprünge aufweist mit Vorteil ohne die Schale mit dem Achsrohr verbunden werden bzw. sein. Es versteht sich, dass der Längslenker auch am rahmenseitigen Anordnungsabschnitt zumindest einen Vorsprung aufweisen kann. Sämtliche Vorteile und Merkmale gelten dabei in gleicher Weise.

Zweckmäßigerweise verbindet der zumindest eine Vorsprung den Längslenker und das Achsrohr und/oder die Schale in einem Bogen. Mit Vorteil erstreckt sich dabei der Bogen im Wesentlichen quer zur Längsrichtung vom Längslenker zum Achsrohr. Der Bogen kann dabei konvex oder konkav ausgeführt sein. Mit Vorteil ist er derart gestaltet, dass ein Kraftfluss zwischen dem Achsrohr und dem Längslenker optimierbar ist. Mit anderen Worten stellt der Bogen sozusagen eine Verbindung der beiden Linienkontakte dar. Der Bogen ermöglicht eine sehr steife Anbindung des Achsrohrs. Zudem ist durch den Vorsprung sozusagen die Breite des achsrohrseitigen Anordnungsabschnitts vergrößerbar. Die Belastungsspitzen auf das Achsrohr nehmen ab. Außerdem wird der Kraftfluss zwischen dem Längslenker und dem Achsrohr verringert, da der Vorsprung durch den Linienkontakt einen zusätzlichen "Kräftepfad" bereitstellt. An dieser Stelle sei erwähnt, dass es auch möglich wäre, dass die Verbindung zwischen dem Längslenker und dem Achsrohr auch ausschließlich über den bzw. die Vorsprünge möglich ist, dass also der ursprüngliche oder eigentliche achsrohrseitige Anordnungsbereich des Längslenkers gar keinen unmittelbaren Kontakt mehr mit dem Achsrohr aufweist. Vorteilhafterweise erfolgt das Verschweißen des Längslenkers mit dem Achsrohr zumindest bereichsweise entlang des Vorsprungs. Es versteht sich, dass der Vorsprung auch mit der Schale verschweißt werden kann.

Zweckmäßigerweise ist zu beiden Seiten des achsrohrseitigen Anordnungsabschnitts ein Vorsprung angeordnet, wobei die beiden Vorsprünge vorzugsweise eine unterschiedliche Breite aufweisen. Die Breite bemisst sich dabei im Wesentlichen quer zur Längsrichtung und entlang des Achsrohrs. Mit Vorteil ist durch die Verwendung unterschiedlich breiter Vorsprünge der Versatz der Mittellinie des rahmenseitigen Anordnungsabschnitts zur Mittellinie des achsrohrseitigen Anordnungsabschnitts weiter variierbar. Mit Vorteil ist dadurch eine noch flexiblere Ausgestaltung des Längslenkers möglich. Quer zur Längsrichtung und zur Breite des Vorsprungs weist der Vorsprung mit Vorteil eine (maximale) Höhe auf. Zweckmäßigerweise liegt ein Höhen/Breiten-Verhältnis des Vorsprungs in einem Bereich von etwa 0,2 bis 1,8, bevorzugt bei etwa 0,7 bis 1,8, besonders bevorzugt bei etwa 0,8 bis 1,2.

Erfindungsgemäß ist ein Fahrzeugachssystem, insbesondere für ein Nutzfahrzeug, mit einem Längslenker zur Anbindung eines Achsrohrs an einen Fahrzeugrahmen wie oben beschrieben vorgesehen. Es versteht sich, dass sämtliche Vorteile und Merkmale des erfindungsgemäßen Längslenkers auch für das erfindungsgemäße Fahrzeugachssystem gelten und umgekehrt. Weitere Vorteile und Merkmale ergeben sich aus der nachfolgenden Beschreibung bevorzugter Ausführungsformen des erfindungsgemäßen Längslenkers und des erfindungsgemäßen Fahrzeugachssystems mit Bezug auf die beigefügten Figuren. Einzelne Merkmale der einzelnen Ausführungsformen können dabei im Rahmen der Erfindung miteinander kombiniert werden.

Es zeigen:
- Figur 1:: eine schematische Darstellung einer bevorzugten Ausführungsform eines Längslenkers in einer Draufsicht;
- Figur 2:: eine schematische Darstellung einer bevorzugten Ausführungsform eines Längslenkers mit Anordnungsabschnitten gleicher Breite und einem Versatz;
- Figur 3:: eine schematische Darstellung einer bevorzugten Ausführungsform eines Längslenkers in einer Seitenansicht;
- Figur 4:: eine schematische Darstellung einer bevorzugten Ausführungsform eines Längslenkers in einer Seitenansicht mit einer Schale;
- Figur 5:: eine schematische Darstellung einer bevorzugten Ausführungsform eines Längslenkers mit einem Trägeroberteil und einem Trägerunterteil;
- Figur 6:: eine Schnittansicht einer bevorzugten Ausführungsform eines achsrohrseitigen Anordnungsabschnitts;
- Figur 7:: eine schematische Darstellung einer bevorzugten Ausführungsform eines Längslenkers mit zwei Vorsprüngen in einer Draufsicht.

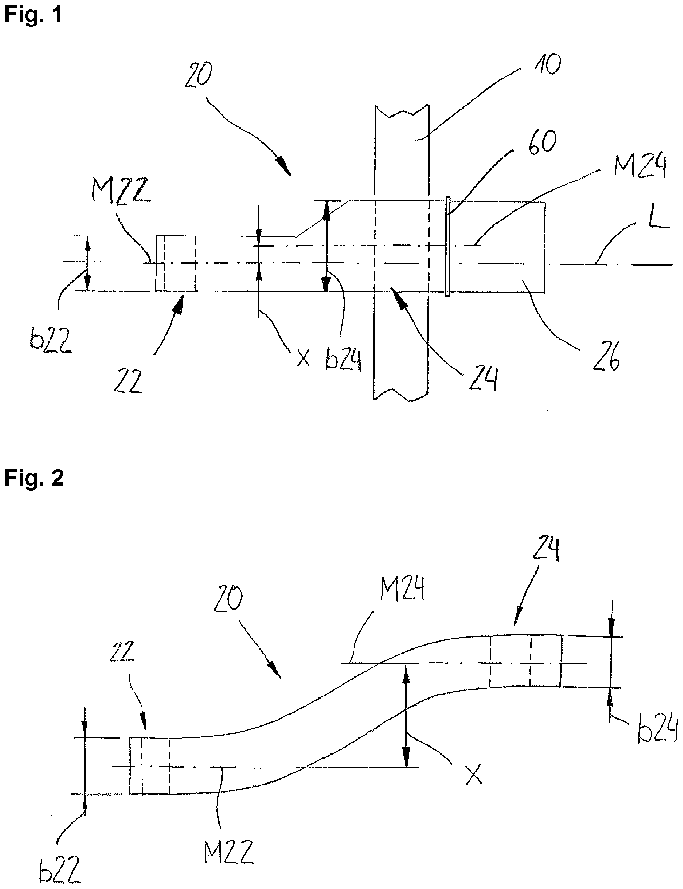

**Fig. 1** zeigt eine schematische Darstellung eines Längslenkers 20 in einer Draufsicht (auf eine Fahrbahnebene). Der Längslenker 20 weist entlang einer Längsachse L einen rahmenseitigen Anordnungsabschnitt 22 und einem achsrohrseitigen Anordnungsabschnitt 24 auf. Eine Mittellinie M22 des rahmenseitigen Anordnungsabschnitts ist um einen Versatz x verlagert zu einer Mittellinie M24 des achsrohrseitigen Anordnungsabschnitts. Innerhalb des achsrohrseitigen Anordnungsabschnitts 24 ist ein Achsrohr 10 angeordnet. Eine Breite b22 des rahmenseitigen Anordnungsabschnitts 22 ist deutlich schmaler als eine Breite b24 des achsrohrseitigen Anordnungsabschnitts 24. Über diesen Unterschied wird letztlich der Versatz x erreicht. Der Längslenker 20 ist über eine Adapterplatte 60 mit einer Tragfläche 26 verbunden.

**Fig. 2** zeigt eine schematische Darstellung einer bevorzugten Ausführungsform eines Längslenkers 20 in einer Draufsicht. Ein rahmenseitiger Anordnungsabschnitt 22 weist eine Breite b22 auf, welche in etwa einer Breite b24 eines achsrohrseitigen Anordnungsabschnitts 24 entspricht. Eine Mittellinie M22 des rahmenseitigen Anordnungsabschnitts 22 ist um einen Versatz x verlagert zu einer Mittelinie M24 des achsrohrseitigen Anordnungsabschnitts 24. Der Versatz x wird in diesem Fall über die S-Form des Längslenkers 20 erzielt.

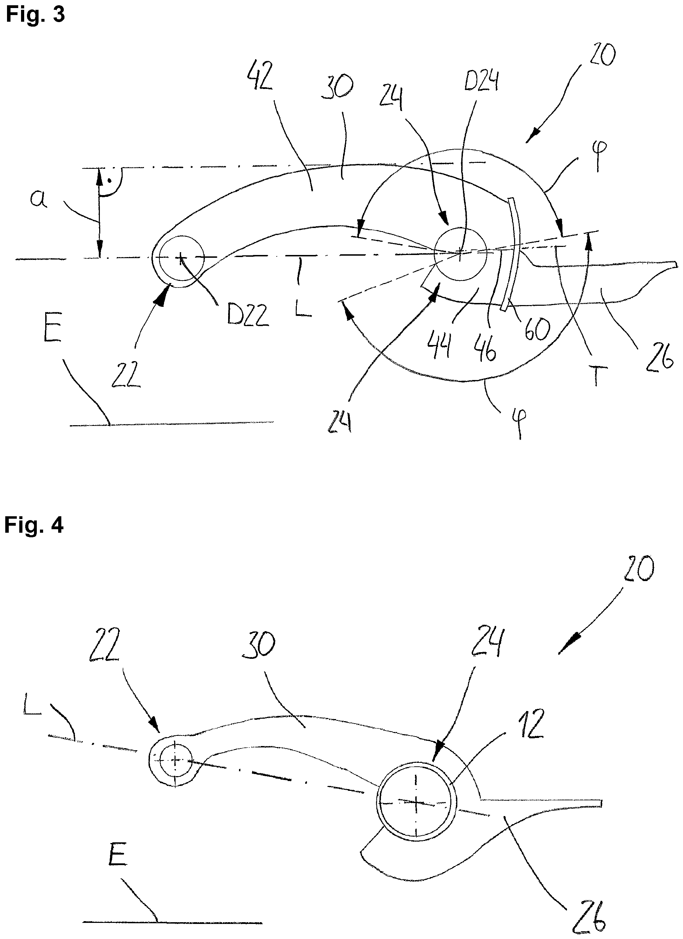

**Fig. 3** zeigt eine weitere bevorzugte Ausführungsform eines Längslenkers 20 in einer Seitenansicht. Der Längslenker 20 umfasst ein Trägeroberteil 42, welches eine Wölbung 30 aufweist sowie ein Trägerunterteil 44. Die Wölbung 30 weist eine maximale Erstreckung a auf, wobei sich die Erstreckung lotrecht zum Abstand der Drehpunkte bzw. Mittelpunkte D22 und D24 des rahmenseitigen 22 und des achsrohrseitigen Anordnungsabschnitts 24 bemisst. In der in Fig. 3 dargestellten Ausführungsform ist der Abstand der Drehpunkte bzw. Mittelpunkte D22 und D24 im Wesentlichen parallel zur Längsrichtung L wie auch zu einer horizontalen Eben E ausgerichtet. Das Trägeroberteil 42 sowie das Trägerunterteil 44 sind über eine gemeinsame Kontaktfläche 46, welche innerhalb einer Teilungsebene T liegt, verbunden. Die Teilungsebene T bzw. die Kontaktfläche 46 liegt im Wesentlichen parallel zu der horizontalen Ebene E. Sowohl das Trägeroberteil 42 als auch das Trägerunterteil 44 umschlingen mit ihren jeweiligen achsrohrseitigen Anordnungsabschnitten 24 ein Achsrohr (hier nicht dargestellt) mit Umschlingungswinkeln < 180°. Außer der Kontaktfläche 46 sind das Trägeroberteil 42 und das Trägerunterteil 44 über eine Adapterplatte 60 verbunden. Weiter ist an der Adapterplatte 60 eine Tragfläche 26 angeordnet, welche der Anordnung eines Feder-/Dämpferelements, beispielsweise einem Luftfederbalg, dient. Der gesamte Längslenker 20 erstreckt sich im Wesentlichen entlang der Längsrichtung L, welche im Wesentlichen parallel zur horizontalen Ebene E orientiert ist.

**Fig. 4** zeigt eine weitere bevorzugte Ausführungsform eines Längslenkers 20 in einer Seitenansicht. Der Längslenker 20 ist über eine Schale 12 mit einen Achsrohr (hier nicht dargestellt) verbindbar. Die Schale 12 wird durch einen achsrohrseitigen Anordnungsabschnitt 24 des Längslenkers 20 verbunden, wobei hier ein Umschlingungswinkel > 180° realisiert ist. Der Längslenker 20 ist in der dargestellten Ausführungsform komplett einteilig ausgebildet und formt an seinem hinteren Ende eine Tragfläche 26 sowie zwischen dem achsrohrseitigen Anordnungsabschnitt 24 und einem rahmenseitigen Anordnungsabschnitt 22 eine Wölbung 30. Die Wölbung 30 erstreckt sich im Wesentlichen weg von einer horizontalen Ebene E.

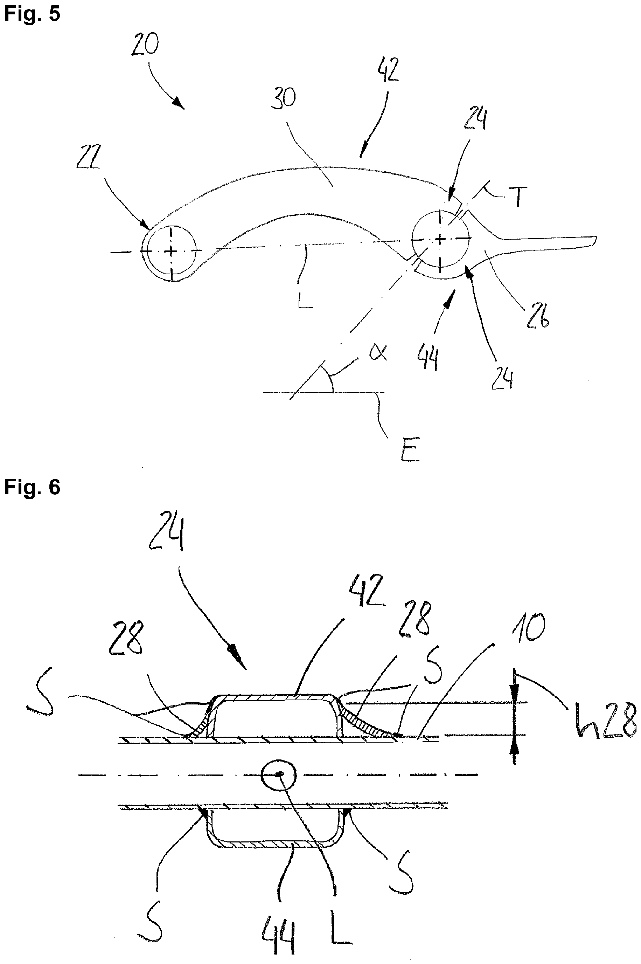

**Fig. 5** zeigt eine weitere bevorzugte Ausführungsform eines Längslenkers 20 in einer Seitenansicht. Der Längslenker 20 weist ein Trägeroberteil 42 und ein Trägerunterteil 44 auf, welche mit ihren jeweiligen achsrohrseitigen Anordnungsabschnitten 24 eine Teilungsebene T bilden. Das Trägerunterteil 44 weist weiter eine Tragfläche 26 auf. Die Teilungsebene T bildet einen Winkel α mit einer horizontalen Ebene E. Weiter weist das Trägeroberteil 42 einen rahmenseitigen Anordnungsabschnitt 22 auf. Zwischen dem rahmenseitigen Anordnungsabschnitt 22 und dem achsrohrseitigen Anordnungsabschnitt 24 des Trägeroberteils 42 ist eine Wölbung 30 ausgebildet, welche sozusagen einen Freiraum zwischen dem rahmenseitigen Anordnungsabschnitt 22 und dem achsrohrseitigen Anordnungsabschnitt 24 schafft. Das Trägeroberteil 42 sowie das Trägerunterteil 44 sind in der in Fig. 5 dargestellten Ausführungsform nicht direkt miteinander verbunden.

**Fig. 6** zeigt eine bevorzugte Ausführungsform eines achsrohrseitigen Anordnungsabschnitts 24 in einer Schnittdarstellung quer zu einer Längsrichtung L und entlang eines Achsrohrs 10. Der Längslenker umfasst ein Trägeroberteil 42 sowie ein Trägerunterteil 44. Das Trägerunterteil 44 ist direkt über Schweißnähte S and das Achsrohr 10 geschweißt. Das Trägeroberteil 42 weist an beiden Seiten je einen Vorsprung 28 auf, welche sich im Wesentlichen konkav von dem Trägeroberteil 42 zum Achsrohr 10 erstrecken. Quer zum Achsrohr 10 und zur Längsachse L weisen die Vorsprünge eine Höhe h28 auf. In der in Fig. 6 dargestellten Ausführungsform sind auch die beiden Vorsprünge 28 über Schweißnähte S mit dem

Achsrohr 10 verbunden. Es versteht sich, dass die Vorsprünge 28 auch eine eher konvexe oder gerade Form im Querschnitt darstellen bzw. aufweisen können. Hierbei wird auch deutlich, dass die beiden Vorsprünge 28 keinen Flächen- sondern einen Linienkontakt mit dem Achsrohr 10 bzw. mit dem Trägeroberteil 42 aufweisen. Entlang des Linienkontakts findet mit Vorteil die Verschweißung statt. Fig. 6 zeigt weiter, dass nun von oben über vier Stellen eine Krafteinleitung in das Achsrohr 10 stattfinden kann, dadurch dass zu den beiden (Kontakt-)Stellen des Trägeroberteils 42 auch die beiden (Kontakt-)Stellen der Vorsprünge 28 hinzukommen. Es versteht sich, dass eine Krafteinleitung allein über die Vorsprünge 28 möglich wäre. Deutlich zu sehen ist weiter, dass entlang des Achsrohrs 10 die beiden Vorsprünge 28 unterschiedlich breit sind.

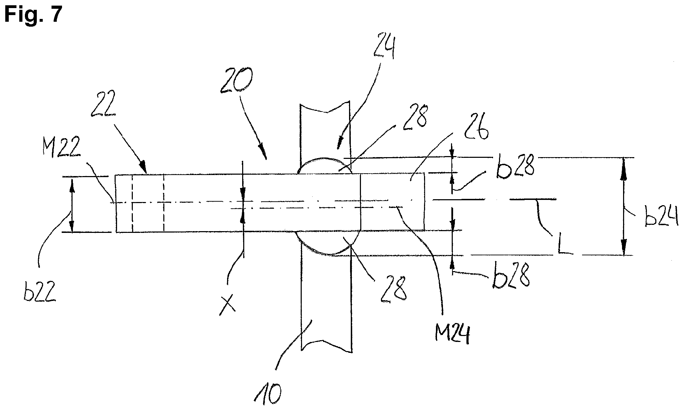

**Fig. 7** zeigt eine weitere bevorzugte Ausführungsform eines Längslenkers 20 in einer Draufsicht. Der Längslenker 20 weist einen rahmenseitigen Anordnungsabschnitt 22 sowie einen achsrohrseitigen Anordnungsabschnitt 24 auf. An dem achsrohrseitigen Anordnungsabschnitt 24 ist zu beiden Seiten je ein Vorsprung 28 angeordnet, wobei die Breiten b28 der Vorsprünge 28 unterschiedlich ausgebildet sind. Dies führt dazu, dass eine Mittellinie M24 des achsrohrseitigen Anordnungsabschnitt 24 um einen Versatz x verlagert zu einer Mittellinie M22 des rahmenseitigen Anordnungsabschnitts 22 orientiert ist. Es versteht sich, dass unterschiedlich breite Vorsprünge 28 auch mit Längslenkern 20 kombinierbar sind, welche bereits in sich den Versatz x zwischen dem rahmenseitigen Anordnungsabschnitt 22 und dem achsrohrseitigen Anordnungsabschnitt 24 aufweisen. Im vorliegenden Fall ist der Versatz x über die unterschiedlich breiten Vorsprünge 28 realisiert. Tatsächlich wären die beiden Anordnungsabschnitte aufgrund der in Längsrichtung L konstanten Längslenkerform etwa gleich breit. Durch die Verwendung unterschiedlich breiter Vorsprünge 28 kann nun eine Breite b24 des achsohrseitigen Anordnungsabschnitts 24 breiter ausgeführt sein als eine Breite b22 des rahmenseitigen Anordnungsabschnitts.

### Bezugszeichenliste

- 10: Achsrohr
- 12: Schale
- 20: Längslenker
- 22: rahmenseitiger Anordnungsabschnitt
- 24: achsrohrseitiger Anordnungsabschnitt
- 26: Tragfläche
- 28: Vorsprung
- 30: Wölbung
- 42: Trägeroberteil
- 44: Trägerunterteil
- 46: Kontaktfläche
- 60: Adapterplatte
- D22, D24: Drehpunkte
- E: horizontale Ebene
- S: Schweißnaht
- T: Teilungsebene
- L: Längsrichtung
- M22, M24: Mittellinien
- a: Erstreckung
- b22: Breite des rahmenseitigen Anordnungsabschnitts
- b24: Breite des achsrohrseitigen Anordnungsabschnitts
- b28: Breite des Vorsprungs
- h28: Höhe des Vorsprungs
- x: Versatz
- ϕ: Umschlingungswinkel
- α: Winkel der Ebenen

## Patentansprüche

1. Längslenker (20) zur Anbindung eines Achsrohrs (10) an einen Fahrzeugrahmen, welcher sich entlang einer Längsrichtung (L) erstreckt und einen rahmenseitigen Anordnungsabschnitt (22) und zumindest einen achsrohrseitigen Anordnungsabschnitt (24) aufweist,
wobei eine Mittellinie (M24) des achsrohrseitigen Anordnungsabschnitts (24) quer zur Längsrichtung (L) gesehen zu einer Mittellinie (M22) des rahmenseitigen Anordnungsabschnitts (22) um einen Versatz (x) verlagert ist, wobei der Längslenker (20) zumindest bereichsweise als Hohlprofil ausgebildet ist,
wobei der Längslenker (20) ein Trägeroberteil (42) und ein Trägerunterteil (44) aufweist, und
wobei das Trägeroberteil (42) und/oder das Trägerunterteil (44) je einen achsrohrseitigen Anordnungsabschnitt (24) aufweisen,
wobei das Trägeroberteil (42) und das Trägerunterteil (44) eine Teilungsebene (T) bilden, welche in einem Winkel (α) zur horizontale Ebene (E) steht,
**dadurch gekennzeichnet, dass** der oder die achsrohrseitigen Anordnungsabschnitte (24) einen Umschlingungswinkel (ϕ) < 180° aufweisen.

2. Längslenker (20) nach Anspruch 1,
wobei das Hohlprofil vorzugsweise einen Querschnitt aufweist, welcher in Richtung des rahmenseitigen Anordnungsabschnitts (22) zumindest bereichsweise zunimmt.

3. Längslenker (20) nach Anspruch 1 oder 2,
wobei der Längslenker (20) quer zu einer horizontalen Ebene (E) eine Wölbung (30) aufweist,
wobei sich die Wölbung bevorzugt zwischen dem achsrohrseitigen (24) und dem rahmenseitigen Anordnungsabschnitt (22) erstreckt.

4. Längslenker (20) nach einem der vorhergehenden Ansprüche,
wobei das Trägeroberteil (42) und/oder das Trägerunterteil (44) form- und/oder kraftschlüssig mit einer Adapterplatte (60) verbunden sind, und wobei die Adapterplatte (60) form- und/oder kraftschlüssig mit einer Tragfläche (26) verbunden ist, welche für die Anordnung eines Feder-/Dämpferelements ausgelegt ist.

5. Längslenker (20) nach einem der vorhergehenden Ansprüche,
wobei der Längslenker (20) am achsrohrseitigen Anordnungsabschnitt (24) zur Anbindung des Achsrohrs (10) und/oder einer Schale (12) zumindest einen Vorsprung (28) aufweist, welcher sich im Wesentlichen entlang des Achsrohrs (10) erstreckt.

6. Längslenker (20) nach Anspruch 5,
wobei der zumindest eine Vorsprung (28) den Längslenker (20) und das Achsrohr (10) und/oder die Schale (12) in einem Bogen verbindet.

7. Längslenker (20) nach einem der Ansprüche 5 oder 6,
wobei zu beiden Seiten des achsrohrseitigen Anordnungsabschnitts (24) der Vorsprung (28) angeordnet ist, und
wobei die beiden Vorsprünge (28) vorzugsweise eine unterschiedliche Breite (b) aufweisen.

8. Fahrzeugachssystem, insbesondere für ein Nutzfahrzeug,
mit einem Längslenker (20) gemäß einem der Ansprüche 1 - 7.

## Claims

1. A longitudinal control arm (20) for connection of an axle tube (10) to a vehicle frame, said longitudinal control arm extending along a longitudinal direction (L) and
comprising an arrangement section (22) on the frame side and at least one arrangement section (24) on the axle tube side,
wherein a centerline (M24) of the arrangement section (24) on the axle tube side is offset or displaced by an offset (x) from a centerline (M22) of the arrangement section (22) on the frame side when seen transverse to the longitudinal direction (L)
wherein the longitudinal control arm (20) is formed as a hollow profile at least in regions,
wherein the longitudinal control arm (20) has an upper support part (42) and a lower support part (44), and
wherein the upper support part (42) and/or the lower support part (44) each has/have an arrangement section (24) on the axle tube side,
wherein the upper support part (42) and the lower support part (44) form a parting plane (T), which is positioned at an angle (α) relative to the horizontal plane (E)
**characterized by**,
the arrangement section(s) (24) has/have an angle of enlacement (ϕ) < 180°.

2. The longitudinal control arm of claim 1,
wherein the hollow profile preferably has a cross-section, which increases at least in regions in the direction of the arrangement section (22) on the frame side.

3. The longitudinal control arm (20) of claim 1 or 2,
wherein the longitudinal control arm (20) has a curvature (30) transverse to a horizontal plane (E),
wherein the curvature preferably extends between the arrangement section (24) on the axle tube side and the arrangement section (22) on the frame side.

4. The longitudinal control arm (20) of any one of the preceding claims,
wherein the upper support part (42) and/or the lower support part (44) is/are connected to an adapter plate (60) in a form-fitting and/or in a force-fitting manner, and
wherein the adapter plate (60) is in a form-fitting and/or force-fitting manner connected to a bearing surface (26) adapted for the arrangement of a spring/damper element.

5. The longitudinal control arm (20) of any one of the preceding claims,
wherein, on the arrangement section (24) on the axle tube side, for connecting the axle tube (10) and/or a wrap (12), the longitudinal control arm (20) has at least one projection (28) extending substantially along the axle tube (10).

6. The longitudinal control arm (20) of claim 5,
wherein the at least one projection (28) connects the longitudinal control arm (20) and the axle tube (10) and/or the wrap (12) in an arc.

7. The longitudinal control arm (20) of any one of claims 5 or 6,
wherein the projection (28) is arranged on either side of the arrangement section (24) on the axle tube side, and
wherein the two projections (28) preferably have different widths (b).

8. Vehicle axle system, in particular for a utility vehicle,
having a longitudinal control arm (20) according to any one of claims 1-7.

## Revendications

1. Bras oscillant longitudinal (20) pour attacher un tube d'essieu (10) sur un châssis de véhicule, qui s'étend le long d'une direction longitudinale (L) et qui comprend une portion de montage côté châssis (22) et au moins une portion de montage côté tube d'essieu (24), dans lequel une ligne médiane (M24) de la portion de montage côté tube d'essieu (24), vue transversalement à la direction longitudinale (L), est décalée d'un décalage (x) par rapport à une ligne médiane (M22) de la portion de montage côté châssis (22),
le bras oscillant longitudinal (20) est réalisé au moins localement sous forme de profilé creux,
le bras oscillant longitudinal (20) comprend une partie de support supérieure (42) et une partie de support inférieure (44), et
la partie de support supérieure (42) et/ou la partie de support inférieure (44) présentent chacune une portion de montage côté tube d'essieu (24),
la partie de support supérieure (42) et la partie de support inférieure (44) forment un plan de séparation (T) qui définit un angle (α) avec le plan horizontal (E),
**caractérisé en ce que**
la ou les portions côté tube d'essieu (24) présente(nt) un angle d'enlacement (ϕ) < 180°.

2. Bras oscillant longitudinal (20) selon la revendication 1,
dans lequel le profilé creux présente de préférence une section transversale qui augmente au moins localement en direction de la portion de montage côté châssis (22).

3. Bras oscillant longitudinal (20) selon la revendication 1 ou 2,
dans lequel le bras oscillant longitudinal (20) présente un bombement (30) transversalement à un plan horizontal (E),
et le bombement s'étend de préférence entre la portion de montage côté tube d'essieu (24) et la portion de montage côté châssis (22).

4. Bras oscillant longitudinal (20) selon l'une des revendications précédentes,
dans lequel la partie de support supérieure (42) et/ou la partie de support inférieure (44) sont reliées par coopération de formes et/ou de forces à un panneau adaptateur (60), et le panneau adaptateur (60) est relié par coopération de formes et/ou de forces à une surface de support (26) qui est conçue pour l'agencement d'un élément à ressort et/ou amortisseur.

5. Bras oscillant longitudinal (20) selon l'une des revendications précédentes,
dans lequel le bras oscillant longitudinal (20) présente au moins une saillie (28) sur la portion de montage côté tube d'essieu (24) pour attacher le tube d'essieu (10) et/ou une coque (12), ladite saillie s'étendant sensiblement le long du tube d'essieu (10).

6. Bras oscillant longitudinal (20) selon la revendication 5,
dans lequel ladite au moins une saillie (28) relie le bras oscillant longitudinal (20) et le tube d'essieu (10) et/ou la coque (12) dans un coude.

7. Bras oscillant longitudinal (20) selon l'une des revendications 5 ou 6,
dans lequel la saillie (28) est agencée de part et d'autre de la portion de montage côté tube d'essieu (24), et
les deux saillies (28) présentent de préférence une largeur différente (b).

8. Système d'essieu de véhicule, en particulier pour un véhicule utilitaire, comportant un bras oscillant longitudinal (20) selon l'une des revendications 1 à 7.
